# EUROPEAN PATENT APPLICATION

(11) **EP 0 825 791 A1**
(43) Date of publication of application: **25.02.1998**
(21) Application number: 96305956.3
(22) Date of filing: 15.08.1996
(51) Int. Cl.: H04Q 7/32

(54) **Mobile telephone system**

(71) Applicant: BRITISH TELECOMMUNICATIONS public limited company, London EC1A 7AJ (GB)
(72) Inventor: The designation of the inventor has not yet been filed
(74) Representative: Lidbetter, Timothy Guy Edwin

(57) **Abstract**

During the registration process by which a connection is set up between a mobile telephone and a base station of a mobile telephone network the telephone acquires program data from the network for controlling its operation. This allows upgrades of the system to be provided automatically to the mobile telephone. The mobile telephone (1) and base station (10) each have a memory (7, 19) for storing program data relating to one or more modes of operation. During the registration process the base station (10) transmits a signal indicative of a preferred mode of operation. The mobile telephone (1) responds with a signal indicative of whether its memory (7) already contains program data for this mode of operation. If the signal indicates that the memory (7) does not have this program data, the base station (10) transmits the required program data to the mobile telephone (1). The base station (10) and mobile telephone (1) can then operate in this mode.

If the mobile telephone (1) is unable to accept the data; (for example because it has insufficient memory), the process is repeated with different programs until a program is identified for which there is sufficient capacity in the memory (7), or which is already stored there.

If a call attempt is initiated before this process is complete, the process is curtailed, such that the base station (10) and mobile telephone (1) identify programs already stored in the memory (7), but make no attempt to load a new program, as this could delay call set-up.

If the base station (10) receives no response to its initial indication of a preferred program, as would occur if it establishes contact with a conventional (non-programmable) mobile telephone, the base station (10) operates in a default mode.

## Description

The present invention relates to mobile telephone systems.

The GSM (Global System for Mobile communications) mobile telephone system currently supports two speech coding algorithms, the 13 Kbit/s "full-rate" codec and the 5.6 Kbit/s "half-rate" codec (coder-decoder). Control programs, based on these codec algorithms, are stored in read-only memory (ROM) within the telephone. It is envisaged that improved algorithms, providing more accurate or faster coding, will be developed in the future, but if the customer is to make use of them, he has to replace his telephone by one programmed with the new codec algorithm. Conflict can arise between the customer and the network operator over who should bear the cost of the replacement.

International patent specification WO-A-95/04425 (Ericsson) relates to a reprogrammable mobile telephone. This document discloses the use of a special card, called a SUM (software upgrade module), which can be sent to customers for reprogramming their telephones.

The present Applicant's European patent application 96300950.1 makes use of a Subscriber Identity Module (SIM) to perform an upgrading function. A SIM is provided to each subscriber of a GSM system. It has an integrated circuit which includes a memory which stores an identifying code unique to the subscriber. SIMs may be transferred between mobile telephones so that, for instance, the subscriber may switch between a handheld unit or a vehicle-mounted unit as appropriate without having to have separate network identities for each unit. In the above-mentioned European patent application the SIM includes a memory which stores program data comprising instructions to the processing means of the mobile telephone which control the telephone and perform signal processing and coding/decoding of speech signals.

However, with this arrangement it is necessary to produce and distribute a new SIM when a software upgrade is launched. It is also possible that some upgrades are incompatible with some handsets (in particular because conventional handsets are not programmable) so, if the new SIM is to remain compatible with all handsets, provision must be made for selectively copying the program according to the suitability of the handset. The base stations must be capable of operation according to either the original codec or the new one. Moreover, the large-scale replacement of SIMs involves an administrative overhead both in distributing them, and in updating the records of the network, to match each subscriber to the electronic identity of his or her new SIM, and to invalidate the electronic identity of the old SIM it replaces.

According to one aspect of the present invention, there is provided a method of setting up a connection between a mobile telephone and a base station of a mobile telephone network, comprising the step of:
on registration of the mobile telephone with the network, acquiring program data from the network for controlling the operation of the telephone.

According to another aspect, the invention provides a mobile telephone comprising: processing means for acquiring program data over a radio link from a mobile radio system, transceiver means arranged to operate according to the program data; and a memory for storing the acquired program data for use in subsequent interactions with the mobile radio system.

According to a further aspect, the invention comprises a mobile telephone network, comprising data transmission means for transmitting program data from the network to a telephone on initiation of an interaction between the mobile network and the telephone, the program data being arranged for controlling the operation of the telephone during the said and subsequent interactions.

In the preferred embodiment, the program data comprises instructions for performing a speech coding/decoding algorithm in a speech codec, but the invention may also be used for performing other upgrades of the telephone.

Preferably, the mobile telephone and mobile telephone network each have a memory for storing program data relating to one or more modes of operation; and the method comprises the steps of: transmitting an initial radio signal indicative of a first mode of operation from the base station to the mobile telephone; detecting the initial radio signal at the mobile telephone; transmitting a response signal from the mobile telephone to the base station, the response signal having a first characteristic if the memory in the mobile telephone does not contain program data for the mode of operation indicated by the signal, and having a second characteristic if the memory already contains the program data; transmitting the program data to the mobile telephone if the first characteristic is detected; and operating the base station and mobile telephone according to the first mode if either the first or the second characteristic is detected.

In a preferred arrangement, when the program data is transmitted to the mobile telephone the method further comprises the steps of: determining whether the mobile telephone has successfully acquired the program data; transmitting a further signal from the mobile telephone to the base station, the further signal having a third characteristic if the program data has been successfully acquired, and a fourth characteristic if the program data has not been successfully acquired,

the base station and mobile telephone operating in the first mode only if the third radio signal is transmitted; and operating in a second mode if the fourth characteristic is transmitted.

Preferably, if the fourth characteristic is transmitted, the method comprises the steps of transmitting one or more further radio signals, indicative of further modes of operation, and the transmission of signals having the first, second, third and fourth characteristics according to the presence or absence, and successful or unsuccessful acquisition, of program data relating to the further modes of operation.

The mobile telephone may include a further memory storing further program data for use in a default mode, the processing means being operable selectively according to said program data or further program data, in dependence on the characteristics of the radio signals.

The mobile telephone network can be arranged to operate in a default mode if the fourth characteristic is detected in response to each transmission relating to the available modes of operation, or if no response to the initial radio signal is detected by the base station.

An embodiment of the present invention will now be described, by way of example, with reference to the accompanying drawings; in which:
Figure 1 is a block diagram of a mobile telephone system, according to the present invention, including a mobile telephone 1 and a base station 10;
Figure 2 shows the memory 7 of the telephone 1 of Figure 1 in more detail;
Figure 3 shows the base station 10 of Figure 1 in more detail; and
Figure 4 is a flow chart illustrating the operation of the mobile telephone 1 in co-operation with the base station 10.
Figure 5 is a flow chart illustrating the modified operation of the mobile telephone 1 in co-operation with the base station 10 when a call attempt interrupts the process of Figure 4.
Figure 6 is a flow chart illustrating the operation of a conventional mobile telephone in co-operation with the base station 10.
Figure 7 is a flow chart illustrating the operation of the mobile telephone 1 in co-operation with a conventional base station.

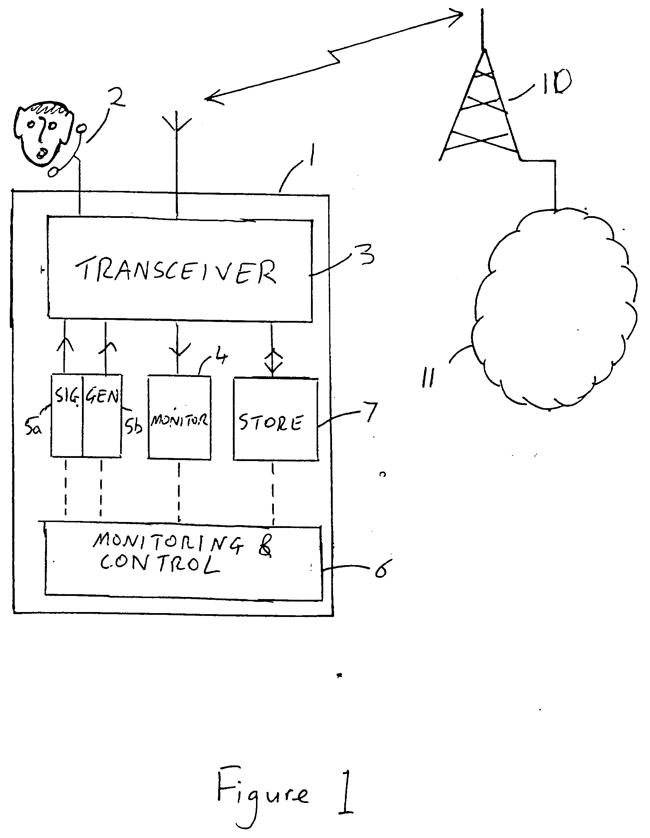

Referring firstly to Figure 1, a mobile telephone 1 comprises a user interface (mouthpiece and earpiece) 2. It also comprises transceiver circuitry 3, a signal monitor 4, signal generators 5a, 5b, a monitoring and control means 6, and a memory 7, which may conveniently all be embodied in a microprocessor, and which will now be described. The transceiver 3 operates according to program data stored in the memory 7. The program data includes data based on signal coding and decoding algorithms, which it uses to digitally encode analogue signals received from the user interface 2 for transmission to the base station 10, and to decode digital signals, received from the base station 10, into analogue form for the user interface 2.

The signal monitor 4 monitors signals received by the transceiver 3. The signal generation means 5a and 5b are arranged to generate signals for transmission by the transceiver 3. The monitoring and control means 6 monitors the operation of the detection means 4 and the contents of the memory 7 and controls the operation of the signal generation means 5a, 5b, and the transfer of data between the memory 7 and the transceiver 3.

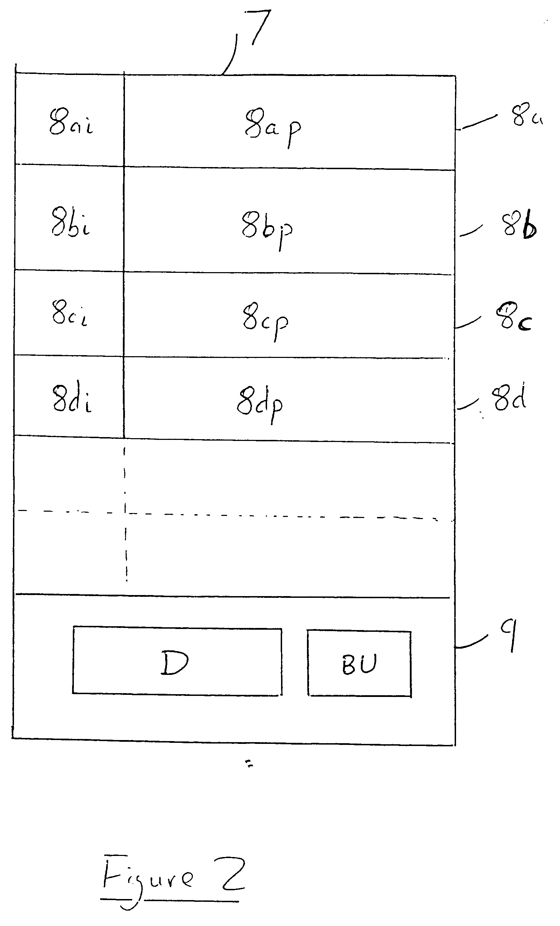

Figure 2 shows the memory 7 in more detail. The memory 7 has a number of programmable stores. These include a number of stores 8ap, 8bp, etc. for storing program data, with corresponding identifier stores 8ai, 8bi etc for storing corresponding identifiers. The stores 8ai, 8ap, 8bi, 8bp etc are programmable (overwritable) e.g. random access memory (RAM) or electronically erasable programmable read-only memory (EEPROM). The latter is preferable as data stored in RAM is lost if power is lost (e.g. through disconnection of the battery), whilst EEPROM data is only erased by entering a special signal. However, RAM is cheaper to provide. There is also a non-volatile read-only memory 9 which includes a program store BU containing a "boot-up" program, and another program store D containing program data for a "default" codec program. Other programmable and/or read-only stores may also be present in the memory 7, to hold data for supporting other functions of the telephone, such as stored numbers for a short-code dialling function.

The mobile radio network shown in Figure 1, illustratively a cellular telephone network, comprises a radio base station 10, connected to a mobile telephone network generally represented as 11.

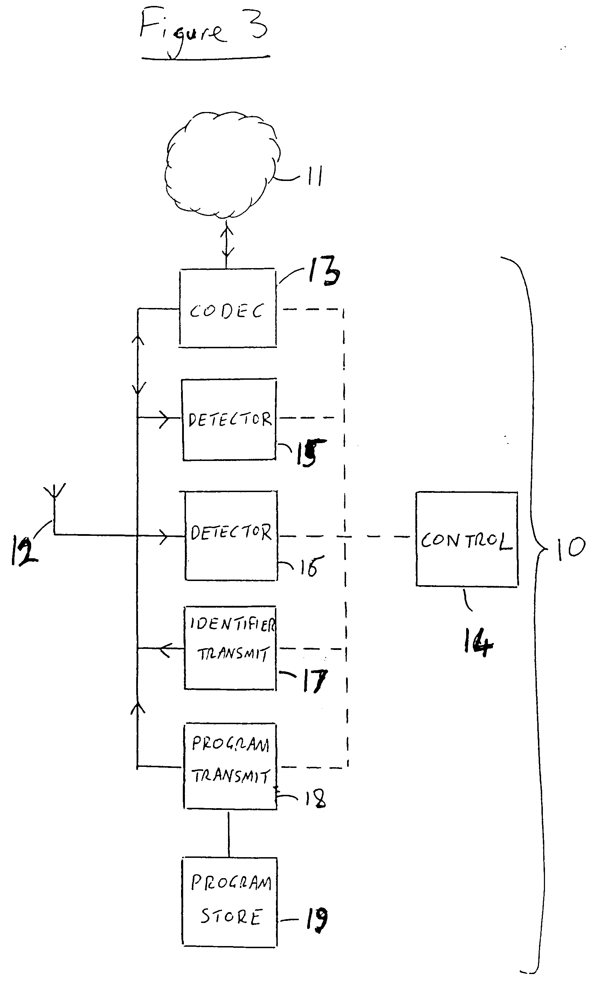

Figure 3 shows the various functional elements of the base station 10 in more detail. The base station 10 comprises an antenna 12 and a transceiver 13 for encoding and decoding signals, received from the network 11, for transmission from the antenna 12, and *vice versa*. The transceiver 13 can operate according to any one of two or more different codec programs, selected under the control of a control unit 14. The control unit 14 is responsive to inputs from two signal detectors 15, 16, which monitor the signals received by the antenna 12 for characteristic signals, which will be described later. The control unit 14 responds to these inputs to control the transceiver 13, and a signal generator 17 which generates a signal for transmission from the antenna. The control unit also controls a data transmission means 18 which is configured to retrieve program data from a memory 19, and transmit it by way of the antenna 12.

It will be appreciated that, although illustrated as being incorporated in the base station 10, some or all of the elements described may be located elsewhere in the network 11, for example at a Mobile Switching Centre (MSC).

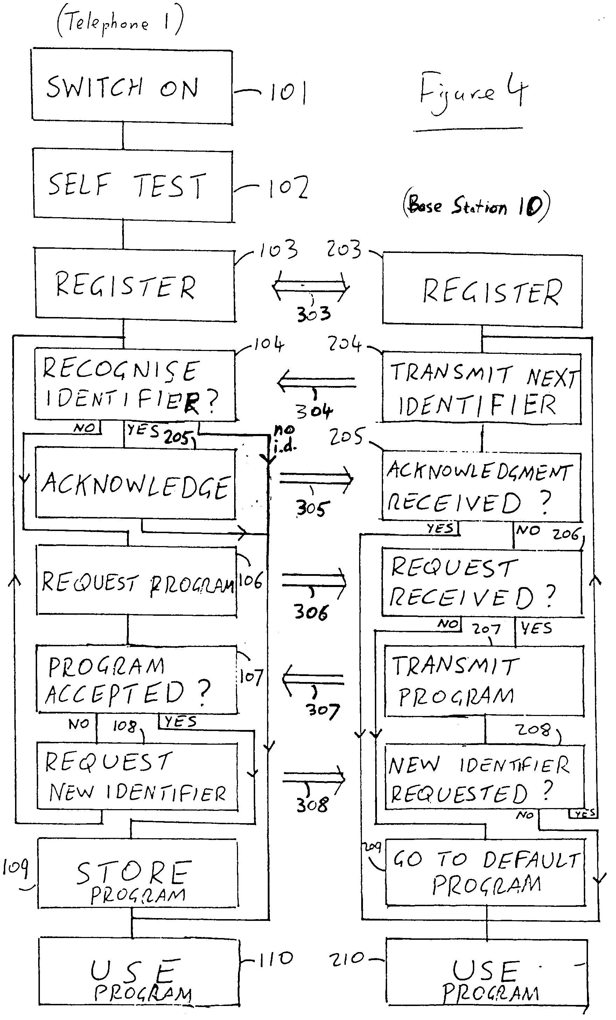

The operation of the system will now be described, with reference to the flow chart of Figure 4. In Figure 4 the steps performed by the mobile telephone are labelled 101 to 110, the steps performed by the network are labelled 203 to 210, and radio transmissions between the mobile telephone and the network or *vice versa* are labelled 303 to 308.

When the telephone is switched on (step 101) to register with the cellular network, the telephone 1 operates according to the boot-up program stored in the program store BU. It first performs a self-test routine (step 102), and then performs a conventional registration operation with the cellular network (step 103/203). This registration operation involves the exchange of signals 303 on a signalling channel to establish the identity of the mobile telephone, synchronise the operation of the mobile telephone with the base station, allocate a radio channel for carrying speech traffic, etc.

An aspect of the GSM system is that the mobile telephones can be used in different countries on networks provided by different operators. However, not all networks will necessarily make the same upgrades at the same time. When a call is set up, the base station 10 transmits a signal 304 indicating its capabilities to the mobile telephone 1 (step 204). This can be done by transmission of an identifier indicative of the coding program proposed for use. If the base station can operate using any of several coding programs, it signals its preferred mode (usually the most efficient).

In order to ensure compatibility between the mobile telephone 1 and the base station 10 it is necessary to establish whether the mobile telephone 1 is capable of operation on this preferred coding/decoding system, and if it does not already have this capability, either arranging for it to acquire this capability or, if that is not possible, ensuring that both the mobile telephone 1 and the base station 10 default to a mutually compatible system. During the exchange of signals 303, the signal generator 17 generates a codec system identifier 304 for transmission to the mobile telephone 1. On recognition of the identifier 304 by the monitor 4 of the mobile telephone 1 (step 104), the controller 2 of the mobile telephone 1 checks whether the identifier 304 corresponds to one already stored in the memory 7. If such an identifier is found, for example in identifier store 8ai, it indicates that the mobile telephone 1 should operate according to the program corresponding to that identifier, in this example 8ap, also stored in the memory 7. The controller 6 then causes the signal generator 5a to signal an acknowledgement 305 to the base station (step 105). The detector 15 in the base station 10 recognises the acknowledgement 305 (step 205) and causes the control unit 14 to instruct the transceiver 13 to operate according to the system selected (step 210). The transceiver 3 in the mobile telephone then loads the program 8ap from the memory 7, and performs the coding and decoding operations according to this program (step 110). However, if an identifier 304 is detected by the detector 4 but not found in the memory 7 by the controller 6, the controller causes the signal generator 5b to transmit a request 306 to download the appropriate coding/decoding system program from the base station 10 (step 106). The detector 16 identifies this request 306 (step 206) and the controller 14 relays it to the memory 19, which transmits the necessary program code 307 through the antenna 12 and thus to the mobile telephone 1 (step 207). The controller 6 attempts to load the code 307 in the transceiver 3, and if it is accepted (step 107) the transceiver performs the coding and decoding operations according to this program (step 110). The new program 307, together with its identifier 304, are also stored for future use in the memory 7, for example in program store 8bp and identifier store 8bi, (step 109).

If the program 307 transmitted by the base station (step 207) is not accepted by the transceiver 3 (step 107) (for example, because it has insufficient processing power to operate it) the controller 6 causes the signal generator 5a to transmit a request for another identifier (step 108). If the detector 15 in the base station 10 receives such a request (step 208), the control unit 14 causes the transmitter 17 to transmit a signal 304 indicating its capability to operate according to a second coding system (step 204 repeated, but using an identifier for the second system). The process is repeated through one or more cycles until either the transceiver 3 in the mobile telephone 1 accepts a program (step 107), or the control means 6 recognises an identifier 304 detected by the monitor 4 as one it already has in its identifier stores 8ai, 8bi, etc (step 104). There may be any number of intermediate default conditions before the final cycle, in which the identifier transmitter 17 in the base station 10 transmits an identifier 304 for the default program. This default identifier is detected by the monitor 4 and recognised by the controller 6 of the mobile telephone 1 (step 104) as the default program permanently stored in the read-only program store D, and therefore causes the generator 5b to acknowledge it (step 105).

The mobile telephone may have a only one program store 8ap, sufficient to hold only one coding type. This would be overwritten whenever a base station requires to operate using a different coding type to that currently stored. Alternatively, as shown in Figure 2, the size of the programmable memory of the mobile telephone 1 may be sufficient to store several different coding schemes 8ap, 8bp, etc (as well as the read-only program store D). This requires more memory, but reduces the need for data transfer and thus facilitates the registration process, because the mobile telephone is more likely to have the appropriate program already stored.

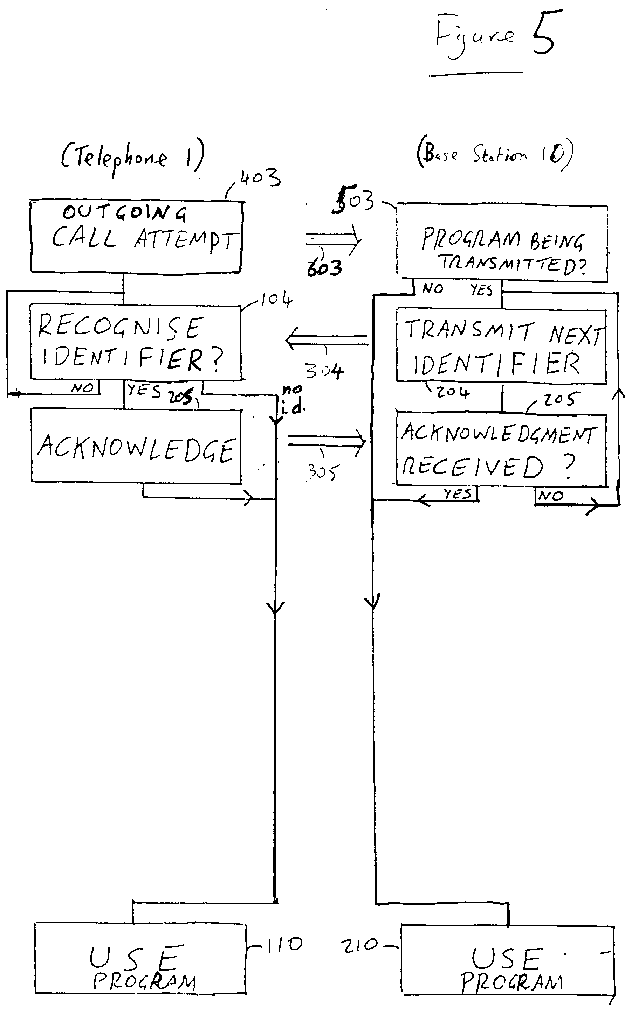

A typical codec program may require of the order of 6 kilobytes (48 kilobits) of storage. Typical data transfers over an air interface operate at around 9.6 kilobits/second: it would therefore take several seconds to load a new codec. If a user switches his telephone on, (thereby causing it to register) and immediately attempts to make a call, the call set-up could be delayed by several seconds by the need to load the codec. Therefore, if a call attempt (step 403, Figure 5) is made by the mobile unit before the transmission of the program (step 207, Figure 4) is complete, the modified handshake procedure shown in Figure 5 takes place. In this procedure, when an outgoing call attempt signal 603 is transmitted to the base station 10, it determines whether it is in the process of transmitting a program, or in the steps preliminary to such a transmission (steps 204, 205, 206 and 207). If it is not, (i.e. the process of identifying a compatible program and, if necessary transmitting it are complete), the base station uses the program which they have already identified as optimum (step 210). The mobile unit similarly goes to its current program 110.

However, if the base station 10 has not yet established the optimum program and, if necessary completed transmitting it, the registration routine is interrupted, such that if no acknowledgement 305 of the identifier 304 is received (step 205), the next preferred identifier is immediately transmitted (step 204), without first waiting for, and responding to, a program request (306). The mobile unit 1 is arranged so that if a call attempt is in progress, if it receives an identifier 304 that it does not recognise, instead of requesting the program corresponding tom that identifier (step 106), it immediately listens out for the next identifier 304 (step 104 repeated). In this way the optimum codec program already stored in the memory 7 can be used. The interrupted programming with the new codec program may be resumed at the end of the call, or it may be carried out over a signalling channel, albeit at a much slower rate, during the call itself, provided that the program currently in use does not need to be erased in order to provide sufficient capacity for the new program.

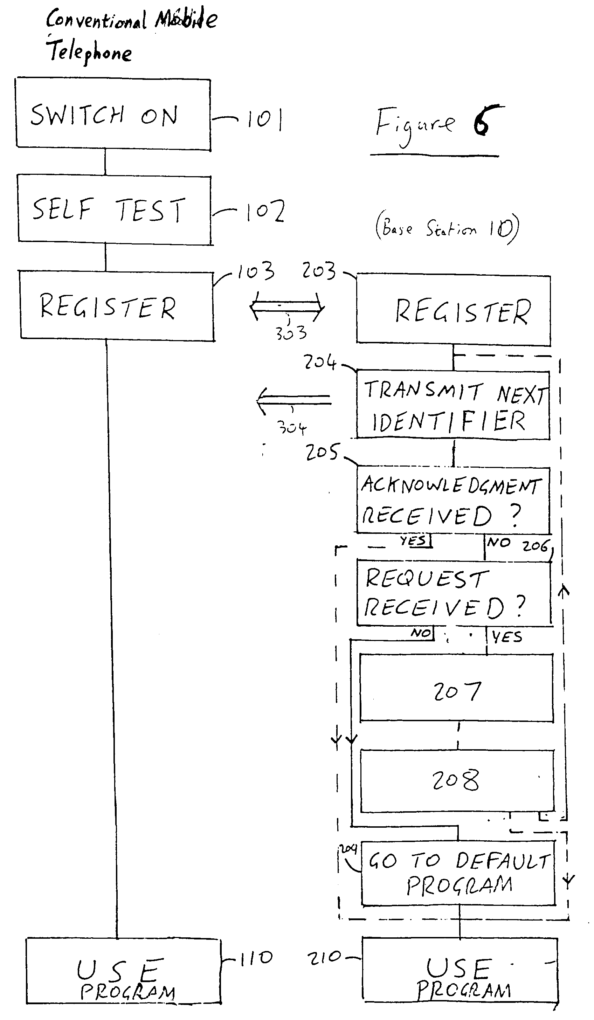

Figure 6 illustrates the operation of the base station 10 with a conventional mobile telephone. Existing mobile telephones do not have the capability to use the improved coding/decoding systems, and can only operate according to the standard codec system. In the event that the base station establishes communication with such a mobile telephone, the mobile telephone will not respond to the identifier signal 304 transmitted by the base station 10. The base station 10 will therefore receive neither an acknowledgement 305 of the identifier 304 (step 205), nor a request 306 for the program (step 206). In this event, as shown by the full lines in Figure 6, it goes straight to its default program (step 209) and thus performs coding and decoding according to the standard codec on which non-programmable mobile telephones operate (which is the same as the default program D in the programmable telephone 1). Thus, the system is "backwards compatible", since older non-programmable telephones can still be accommodated on the network.

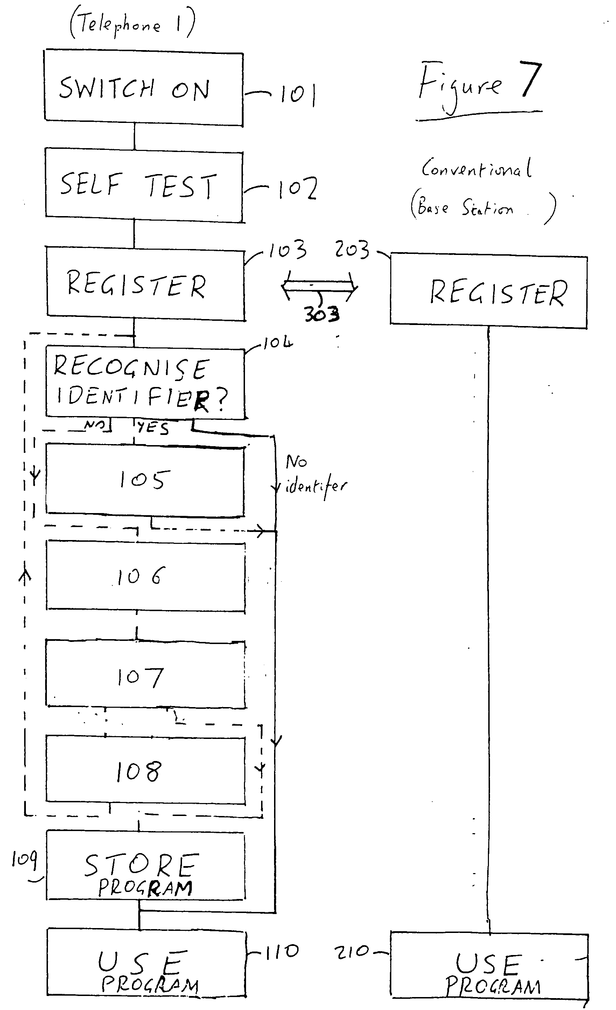

Figure 7 shows the converse operation, of the mobile telephone 1 with a conventional base station. If the mobile telephone 1 attempts to register with a base station not yet modified for operation on any system other than the standard codec, the base station will not transmit an identifier 304. However, if it is arranged to recognise the failure of the monitor 4 to detect an identifier 304 as being equivalent to reception of the identifier for the default program (step 104), and loads the default program from the program store D into the transceiver 3, (step 110) which will then operate according to the default program. However, if no identifier is received, the transmission of an acknowledgement 305 by the generator 5a should be inhibited, to avoid potential confusion at the conventional base station, which is not configured to recognise the signal 305. Alternatively, the acknowledgement 305 of the identifier 304 corresponding to the default program may be selected such that it does not interfere with the operation of a conventional base station.

## Claims

1. A mobile telephone (1) comprising:
processing means (4, 5a, 5b, 6) for acquiring program data over a radio link from a mobile radio system,
transceiver means (3) arranged to operate according to the program data;
and a program store (8ap) for storing the acquired program data for use in subsequent interactions with the mobile radio system.

2. A mobile telephone according to claim 1, wherein the processing means comprises:
detection means (4) for detecting an initial radio signal indicative of a mode of operation;
transmission means (5a) for generating a response signal having a first characteristic for transmission if the program store (8ap) does not contain program data for the mode of operation indicated by the signal; or a second characteristic for transmission if the program store (8ap) already contains the program data.

3. A mobile telephone according to claim 1 or claim 2, wherein the processing means comprises;
monitoring means (6) for determining whether the processing means (2) has successfully acquired the program data;
and transmission means (5b) for generating a signal having a third characteristic for transmission if the program data has been successfully acquired, or a fourth characteristic for transmission if the program data has not been successfully acquired.

4. A mobile telephone according to claim 1, 2 or 3, wherein the program data comprises instructions for performing a speech coding/decoding algorithm.

5. A mobile telephone according to any one of claims 1 to 4, including a read-only program store (D) storing further program data, wherein the transceiver means (3) is operable selectively according to said program data or said further program data, in dependence on characteristics of a received radio signal indicative of a mode of operation.

6. A mobile telephone network, comprising data transmission means (18) for transmitting program data from the network to a mobile telephone on initiation of an interaction between the mobile network and the telephone, the program data being arranged for controlling the operation of the telephone during the said and subsequent interactions.

7. A mobile telephone network according to claim 6 comprising:
storage means (19) for storing program data for controlling a processing means of a mobile telephone;
signalling means (17) to transmit an initial radio signal indicative of a first mode of operation to a mobile station during call set up;
first detection means (15) for detecting a first or a second characteristic in a signal received in response to the transmission of the initial radio signal;
control means (14) responsive to the first detection means (15) to control the data transmission means (18) to transmit the program data relating to the first mode of operation if a response signal having a first characteristic is detected;
operational means (13) controlled by the control means (14) for operating in the first mode if a response signal having the first or a second characteristic is detected by the first detection means (15), or in a default mode if no response signal having either characteristic is detected.

8. A mobile telephone network according to claim 7, having;
second detection means (16) for detecting a response to the transmission of said program data, the response comprising a radio signal having a third or a fourth characteristic;
the control means (14) being controlled by the second detection means (16) for operating in the first mode if the third characteristic is detected or in a second mode if the fourth characteristic is detected.

9. A mobile telephone network according to claim 8, wherein signaling means (17) is controlled by the control means (14) to transmit further radio signals, indicative of further modes of operation, if a signal having the fourth characteristic is detected by the second detection means (16).

10. A mobile telephone network according to claim 8 or 9, the operational means (13) being controlled by the control means (14) to operate in the default mode if the fourth characteristic is detected by the second detection means (16) in response to each transmission relating to the available modes of operation.

11. A mobile telephone network according to claim 6, 7, 8, 9, or 10 wherein the operational means (13) is controlled by the program data to perform a speech coding/decoding algorithm.

12. A method of setting up a connection between a mobile telephone and a base station of a mobile telephone network, comprising the step of:
on registration of the mobile telephone with the network, acquiring program data from the network for controlling the operation of the telephone.

13. A method according to claim 12, comprising the further step of storing the program in the mobile telephone for use in subsequent interactions with the mobile telephone network.

14. A method according to claim 12 or 13, the mobile telephone and mobile telephone network each having a store for storing program data relating to one or more modes of operation; the method comprising the steps of: transmitting an initial radio signal indicative of a first mode of operation from the base station to the mobile telephone;
detecting the initial radio signal at the mobile telephone;
transmitting a response signal from the mobile telephone to the base station, the response signal having a first characteristic if the memory in the mobile telephone does not contain program data for the mode of operation indicated by the signal, and having a second characteristic if the memory already contains the program data;
transmitting the program data to the mobile telephone if the first characteristic is detected; and
operating the base station and mobile telephone according to the first mode if either the first or the second characteristic is detected.

15. A method according to claim 12, 13 or 14, in which the acquisition of said data is interrupted if a call attempt is initiated.

16. A method according to claim 14 or 15, wherein the base station and mobile telephone operate in a default mode if no response to the initial radio signal is detected by the base station.

17. A method according to claim 14, 15 or 16, wherein when the program data is transmitted to the mobile telephone the method further comprises the steps of:
determining whether the mobile telephone has successfully acquired the program data;
transmitting a further signal from the mobile telephone to the base station, the further signal having a third characteristic if the program data has been successfully acquired, and a fourth characteristic if the program data has not been successfully acquired,
the base station and mobile telephone operating in the first mode only if the third radio signal is transmitted;
and operating in a second mode if the fourth characteristic is transmitted.

18. A method according to claim 17, wherein the second mode of operation comprises the steps of transmitting one or more further radio signals, indicative of further modes of operation, and the transmission of signals having the first, second, third and fourth characteristics according to the presence or absence, and successful or unsuccessful acquisition, of program data relating to the further modes of operation.

19. A method according to any of claims 12 to 18, wherein the program data comprises instructions for performing a speech coding/decoding algorithm.

20. A method according to any one of claims 12 to 19, wherein the mobile telephone operates selectively, in dependence on a received radio signal indicative of a mode of operation, according either to said program data or to further program data previously stored in the telephone

21. A mobile telephone substantially as hereinbefore described with reference to the accompanying drawings.

22. A mobile telephone network substantially as hereinbefore described with reference to the accompanying drawings.

23. A method of setting up a connection between a mobile telephone and a mobile telephone network substantially as hereinbefore described with reference to the accompanying drawings
